# EUROPÄISCHE PATENTSCHRIFT

(11) **EP 1 885 578 B1**
(45) Veröffentlichungstag und Bekanntmachung des Hinweises auf die Patenterteilung: **03.08.2016**
(21) Anmeldenummer: 06724025.9
(22) Anmeldetag: 05.04.2006
(51) Int. Cl.: B60N 2/44, B60N 2/64

(54) **FAHRZEUGSITZ MIT LEHNENBREITENVERSTELLUNG UND INTEGRIERTEM SITZ-AIRBAG**
VEHICLE SEAT WITH BACKREST WIDTH ADJUSTER AND INTEGRATED SEAT AIRBAG
SIEGE DE VEHICULE A DOSSIER REGLABLE EN LARGEUR ET AIRBAG DE SIEGE INTEGRE

(30) Priorität: 31.05.2005 DE 102005024774
(43) Veröffentlichungstag der Anmeldung: 13.02.2008
(73) Patentinhaber: Bayerische Motoren Werke Aktiengesellschaft, 80809 München (DE)
(72) Erfinder: GRIMM, Markus, 80993 München (DE)
(86) Internationale Anmeldenummer: PCT/EP2006/003070
(87) Internationale Veröffentlichungsnummer: WO 2006/128513

(56) Entgegenhaltungen:
- EP-A- 0 343 025
- DE-A1- 10 345 834
- DE-U1- 9 014 111
- US-A- 6 129 419
- PATENT ABSTRACTS OF JAPAN Bd. 007, Nr. 031 (M-192), 8. Februar 1983 (1983-02-08) -& JP 57 186534 A (DERUTA KOGYO KK), 17. November 1982 (1982-11-17)

## Beschreibung

Fahrzeugsitz mit Lehnenbreitenverstellung und integriertem Sitz-Airbag Die vorliegende Erfindung betrifft einen Fahrzeugsitz gemäß den Merkmalen des Patentanspruches 1.

Ein Fahrzeugsitz gemäss dem Oberbegriff des Patentanspruchs 1 ist aus der US 6129419 bekannt. Zum technischem Hintergrund der vorliegenden Erfindung zählen ferner die JP 57186534, die DE 10345834A1, die DE 9014111 U1 sowie die EP 343025A1.

Moderne Fahrzeuge sind üblicherweise mit mehreren Airbags ausgestattet. Neben Airbags, die im Lenkrad bzw. in der Instrumententafel angeordnet sind, gibt es Sitz-Airbags, die den Fahrgast bei einem Seitenaufprall schützen sollen. Sitz-Airbags lösen zunehmend die bei älteren Fahrzeugen hinter Türseitenverkleidungen angeordneten Tür-Airbags ab.

Insbesondere von Premiumfahrzeugen wird erwartet, dass die Fahrzeugsitze ähnlich einem Maßanzug möglichst perfekt an den Körper anpassbar sind, um möglichst jedem Fahrgast einen hohen Sitzkomfort und einen guten Seitenhalt zu bieten. Gleichzeitig sollten die Fahrzeugsitze den hohen Sicherheitsanforderungen moderner Fahrzeuge genügen.

Aus der älteren, nicht vorveröffentlichten DE10345834 A1 ist ein Fahrzeugsitz mit einem Lehnenmittelteil und Lehnenseitenteilen bekannt, die durch eine elektromechanische Verstelleinrichtung relativ zu dem Lehnenmittelteil verstellt werden können, wobei durch Verstellen der Lehnenseitenteile die Lehnenbreite verändert werden kann. In einem der Lehnenseitenteile ist ein Airbagmodul angeordnet. In einem vorderen äußeren Bereich dieses Lehnenseitenteils ist eine Aufreißnaht vorgesehen. Bei der Auslösung des Airbags wird die Aufreißnaht durch den Druck des Airbags aufgerissen. Der Airbag kann sich dann zu einem vorderen Sitzbereich hin entfalten. Um den an Sitz-Airbags gestellten Sicherheitsstandards zu genügen muss die Aufreißnaht im Fertigungsprozess einer sorgfältigen Qualitätskontrolle unterzogen werden, was mit beträchtlichen Kosten verbunden ist.

Aufgabe der Erfindung ist es, einen in seiner Lehnenbreite verstellbaren Fahrzeugsitz zu schaffen, der mit einem geringeren Fertigungs- und Kontrollaufwand herstellbar ist.

Diese Aufgabe wird durch die Merkmale der Patentansprüche 1 bzw. 10 gelöst. Vorteilhafte Ausgestaltungen und Weiterbildungen der Erfindung sind den Unteransprüchen zu entnehmen.

Die Erfindung geht von einem Fahrzeugsitz mit einer Lehne aus, die ein Lehnenmittelteil und zwei Lehnenseitenteile aufweist, die sich seitlich von dem Lehnenmittelteil nach vorne erstrecken und die zur seitlichen Körperabstützung vorgesehen sind. Die Lehnenseitenteile weisen jeweils einen mit dem Lehnenmittelteil verbundenen Innenabschnitt und einen damit verbundenen Außenabschnitt auf, welcher einen vorderen Bereich des jeweiligen Lehnenseitenteils überdeckt. Der Innenabschnitt kann konvex gekrümmt sein. Denkbar ist aber auch ein "eingebuchteter", d.h. konkav gekrümmter Innenabschnitt. Die Lehnenseitenteile sind verstellbar in Bezug auf das Lehnenmittelteil angeordnet, derart, dass durch Verstellen der Lehnenseitenteile die Lehnenbreite des Fahrzeugsitzes veränderbar ist.

Der Kern der Erfindung besteht darin, dass der Innenabschnitt und der Außenabschnitt zumindest eines der beiden Lehnenseitenteile einstückig aus einem Schaummaterial hergestellt ist, wobei zumindest in einem Übergangsbereich zwischen dem Innenabschnitt und dem Außenabschnitt in den Innenabschnitt und in den Außenabschnitt ein Versteifungselement "eingeschäumt" ist. Wenn in der folgenden Beschreibung oder in den Patentansprüchen von "eingeschäumt" die Rede ist, dann ist der Begriff "eingeschäumt" breit auszulegen, in dem Sinn, dass auch "angeschäumt" und "angeklebt" umfasst sind und zwar ohne dass letztere Begriffe ausdrücklich verwendet werden. Das Versteifungselement ist dazu vorgesehen, dem Übergangsbereich zwischen dem Innenabschnitt und dem Außenabschnitt sowie dem Außenabschnitt an sich eine gewisse Steifigkeit zu verleihen. Mit Blick auf die Möglichkeit, die Lehnenbreite zu verstellen, soll der Außenabschnitt des Lehnenseitenteils nämlich eine gewisse Flexibilität aufweisen. Andererseits soll jedoch sichergestellt sein, dass der Außenbereich des Lehnenseitenteils über die gesamte Lebensdauer des Fahrzeugs "in Form", d.h. straff bleibt.

Dabei ist ein Airbagmodul an einem sitzäusseren Lehnenseitenteil angeordnet.

Nach einer Weiterbildung der Erfindung ist in einem hinteren Bereich des sitzäußeren Lehnenseitenteils ist ein Airbagmodul angeordnet. Unter dem Begriff "sitzäußeres Lehnenteil" ist dasjenige Lehnenteil zu verstehen, das im Fahrzeug der Fahrzeugaußenseite bzw. der Fahrzeugtür zugewandt und der Fahrzeugmitte abgewandt ist. Bei einer Airbagauslösung tritt der Airbag aus dem Lehnenseitenteil aus und entfaltet sich dabei an dem Außenabschnitt des sitzäußeren Lehnenteils vorbei in Richtung zu einem vorderen Sitzbereich hin.

Nach einer Weiterbildung der Erfindung sind das Lehnenmittelteil und die Lehnenseitenteile mit einem Dekormaterial, z.B. einem Textilmaterial oder Leder, überzogen. Das Dekormaterial ist über den Innenabschnitt und den Außenabschnitt des sitzäußeren Lehnenseitenteils gespannt und um ein hinteres Ende des Außenabschnitts des sitzäußeren Lehnenteils umgeschlagen. Das umgeschlagene Ende des Dekormaterials ist an einer Innenseite des Außenabschnitts des sitzäußeren Lehnenteils an dem Außenabschnitt fixiert. Das umgeschlagene Ende kann beispielsweise an der Innenseite des Außenabschnitts eingehängt, festgeclipst, festgeklebt oder in anderer Weise daran befestigt sein.

Dabei weist der Fahrzeugsitz eine Lehnenrückwand auf, welche eine sitzinnere und eine sitzäußere Seitenwange aufweist. Die Seitenwangen erstrecken sich von der Rückseite des Fahrzeugsitzes seitlich an den Lehnenseitenteilen nach vorne. Die Seitenwangen überdecken dabei die hinteren Bereiche der Seitenteile zumindest teilweise. Die sitzäußere Seitenwange erstreckt sich zumindest soweit nach vorne, dass sie das Airbagmodul von außen her überdeckt. Die sitzäußere Seitenwange weist eine gewissen Biegeelastizität auf und erstreckt sich nur soweit nach vorne, dass bei der Airbagauslösung der Airbag sicher aus dem Lehnenseitenteil austreten und sich außen an dem Außenabschnitt des sitzäußeren Lehnenseitenteils vorbei nach vorne entfalten kann.

Das Airbagmodul ist an einer Tragstruktur bzw. an einem Rahmen der Sitzlehne befestigt sein. Die Tragstruktur bzw. der Rahmen kann eine Schweiß- bzw. Biegekonstruktion sein. Die "Tragstruktur" kann also aus Metallblechen und Rohren hergestellt sein.

Im Normalzustand, d.h. wenn der Sitz-Airbag nicht ausgelöst ist, kann vorgesehen sein, dass das vordere Ende der sitzäußeren Seitenwange der Lehnenrückwand und das hintere Ende des Außenabschnitts des sitzäußeren Lehnenteils im Wesentlichen aneinander anstehen bzw. einander von außen her gesehen geringfügig überdecken.

Wie bereits mehrfach erwähnt, sind die Lehenseitenteile in Bezug auf das Lehnenmittelteil verstellbar angeordnet. Aus Designgründen sollte sichergestellt sein, dass das Airbagmodul, die Tragstruktur der Sitzlehne und andere in der Lehne angeordnete Sitzbestandteile von außen her nicht zu sehen sind und zwar selbst dann nicht, wenn die Lehnenseitenteile ganz "nach vorne innen" ausgefahren sind, d.h. wenn die Sitzlehne auf ihre minimale Lehnenbreite eingestellt ist. Hierzu kann ein Blendenelement vorgesehen sein. Das Blendenelement kann so ausgebildet sein, dass es einen ersten schenkelartigen Abschnitt und einen zweiten schenkelartigen Abschnittt aufwesit. Es kann beispielsweise einen L-förmigen Querschnitt aufweisen. Ein erster Schenkel des Blendenelements kann so angeordnet sein, dass er eine Vorderseite des Airbagmoduls zumindest teilweise überdeckt. Ein zweiter Schenkel des Blendenelements kann sich in einen Bereich zwischen die Innenseite des Außenabschnitts des äußeren Lehnenseitenteils und die Tragstruktur erstrecken. Durch ein derartiges Blendenelement ist sichergestellt, dass selbst bei ganz ausgefahrenen Lehnenseitenteilen das Airbagmodul und die Tragstruktur der Sitzlehne von außen her nicht zu sehen sind.

Im Folgenden wird die Erfindung im Zusammenhang näher erläutert. Es zeigen:
- Figur 1: einen Querschnitt durch die Lehne eines Fahrzeugsitzes gemäß der Erfindung bei eingefahrenem Lehnenseitenteil;
- Figur 2: einen Querschnitt durch die Lehne bei ausgefahrenem Lehnenseitenteil; und
- Figur 3, 4: Ausführungsbeispiele, bei denen der Außenabschnitt des Lehnenseitenteils mittels einer Rückholfeder angelenkt ist.

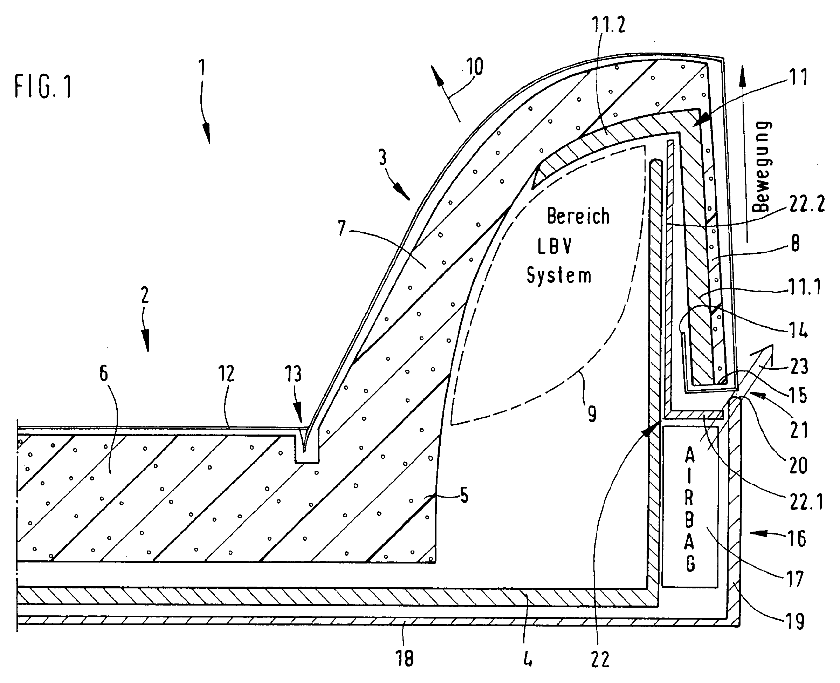

Figur 1 zeigt einen Querschnitt durch die Lehne 1 eines Fahrzeugsitzes. Die Lehne 1 weist ein Lehnenmittelteil 2 und zwei Lehnenseitenteile auf, von denen hier nur ein sitzäußeres Lehnenseitenteil 3 dargestellt ist. Unter dem Begriff "sitzäußeres Lehnenseitenteil 3" ist dasjenige Seitenteil zu verstehen, das, wenn der Sitz in ein Fahrzeug eingebaut ist, der Fahrzeugaußenseite zugewandt und der Fahrzeugmitte abgewandt ist.

Die Lehne 1 weist eine Tragstruktur bzw. einen Lehnenrahmen 4 auf. Die Tragstruktur bzw. der Lehnenrahmen 4 kann aus Blech bzw. Metallrohren in Form einer Biege- und/oder Schweißkonstruktion hergestellt sein. Der Lehnenrahmen 4 dient der Befestigung der übrigen Komponenten der Lehne 1.

Das Lehnenmittelteil 2 und das Lehnenseitenteil 3 weisen eine Schaumschicht 5 auf. Die Schaumschicht 5 kann in mehrere einstückig miteinander verbundene Abschnitte gegliedert sein. Bei dem in Figur 1 gezeigten Ausführungsbeispiel können ein dem Lehnenmittelteil 2 zugeordneten Abschnitt 6, ein Innenabschnitt 7, der konvex gekrümmt ist, und der zur Rücken- bzw. seitlichen Körperabstützung vorgesehen ist sowie ein mit dem Innenabschnitt 7 verbundener Außenabschnitt 8 unterschieden werden. Die Abschnitte 7, 8 des Schaumteils können als zwei "Schenkel" interpretiert werden, ähnlich den Schenkeln eines "U".

Im Bereich zwischen dem Innenabschnitt 7 und dem Außenabschnitt 8 ist eine hier nicht näher dargestellte Lehnenbreitenverstelleinrichtung 9 angeordnet. Die Lehnenbreitenverstelleinrichtung 9 kann beispielsweise durch einen Verschiebemechanismus gebildet sein, der an dem Lehnenrahmen 4 befestigt ist und mit dem das Lehnenseitenteil 3 in eine Richtung 10 schräg nach vorne bzw. hinten verfahren werden kann, was eine Veränderung der Lehnenbreite ermöglicht. Die Lehnenbreitenverstelleinrichtung kann beispielsweise durch einen Mechanismus gebildet sein, wie er in der eingangs erwähnten Patentanmeldung DE10345834 A1 der Anmelderin beschrieben ist. Ausdrücklich sei darauf hingewiesen, dass sämtliche Inhalte der DE10345834 A1, welche sich auf die Verstellung der Lehnenbreite beziehen, auch Gegenstand der vorliegenden Anmeldung sein sollen. Insbesondere sollen einzelne Merkmale oder Kombinationen von Merkmalen der DE10345834 A1 bei Bedarf in die Beschreibung und/oder in die Ansprüche der vorliegenden Patentanmeldung aufnehmbar sein.

Alternativ zu einem Lehnenbreitenverstellmechanismus kann eine Lehnenbreitenverstellhydraulik oder eine Lehnenbreitenverstellpneumatik vorgesehen sein. Beispielsweise kann in das Lehnenseitenteil eine "Blase" integriert sein, die durch einpumpen von Luft bzw. eines anderen Gases oder einer Flüssigkeit "aufgepumpt" werden kann. Je nach Füllungsgrad der Blase ergibt sich eine größere oder eine geringere Lehnenbreite.

Wie aus Figur 1 ersichtlich ist, ist der Außenabschnitt 8 der Schaumschicht vergleichsweise dünn. Um dem Außenabschnitt 8 eine gewisse Steifigkeit, insbesondere eine gewisse Biegesteifigkeit zu geben, ist in die Schaumschicht 5 ein L-förmiges bzw. hakenförmiges Versteifungsteil 11 eingespritzt bzw. eingeschäumt. Das Versteifungsteil 11 weist einen ersten Schenkel 11.1 und einen zweiten Schenkel 11.2 auf. Der erste Schenkel 11.1 des Versteifungsteils 11 ist in den Außenabschnitt 8 eingeschäumt bzw. an den Außenabschnitt 8 angeschäumt. Der zweite Schenkel 11.2 ist in den Abschnitt 7 eingeschäumt bzw. an den Abschnitt 7 angeschäumt. Das Versteifungselement 11 erstreckt sich scharnierartig von dem Abschnitt 7 über den zwischen den Abschnitten 7, 8 befindlichen Übergangsbereich zu dem Abschnitt 8. Das Versteifungselement 11 verleiht dem Abschnitt 8 eine erhöhte Steifigkeit.

Die Lehne 1 ist mit einem Dekormaterial 12 überzogen. Bei dem Dekormaterial kann es sich um ein Textilmaterial, Naturleder, Kunstleder o.ä. handeln. Das Dekormaterial ist über das Lehnenmittelteil 12 in eine Lehnenfalte 13 gespannt. Von der Lehnenfalte 13 ist das Dekormaterial 12 über den Innenabschnitt 7 und den Außenabschnitt 8 der Schaumschicht gespannt. Ein Ende 14 des Dekormaterials 12 ist um ein hinteres Ende 15 des Abschnitts 8 bzw. des Schenkels 11.1 des Verstärkungselements 11 umgeschlagen und an der Innenseite des Schenkels 8 der Schaumschicht 5 bzw. an der Innenseite des Schenkels 11.1 des Verstärkungselements 11 befestigt. Das umgeschlagene Ende 14 kann beispielsweise eingehängt, angeklebt oder in sonstiger Weise mit dem Verstärkungselement 11 bzw. dem Schenkel 8 verbunden sein.

In einem hinteren Bereich 16 des sitzäußeren Lehnenseitenteils 3 ist ein Air-bagmodul 17 angeordnet. Das Airbagmodul 17 ist an dem Rahmen 4 der Lehne befestigt. Das Airbagmodul 17 kann an den Rahmen 4 angeschraubt, angenietet oder in sonstiger Weise daran befestigt sein.

Die Lehne 1 weist ferner eine Lehnenrückwand 18 auf, die an beiden Seiten jeweils mit einer Seitenwange versehen ist. Von den beiden Seitenwangen ist in Figur 1 lediglich die sitzäußere Seitenwange 19 dargestellt. Die sitzäußere Seitenwange erstreckt sich von einer Rückseite der Lehne nach vorne und überdeckt von der Seite her einen hinteren Bereich des sitzäußeren Seitenteils 3. Bei dem in Figur 1 gezeigten Ausführungsbeispiel erstreckt sich die sitzäußere Seitenwange 19 soweit nach vorne, dass sie das Airbagmodul 17 von außen her gesehen überdeckt. Ein vorderes Ende 20 der Seitenwange der Lehnenrückwand 18 steht im Wesentlichen an dem hinteren Ende 15 des Außenabschnitts 8 des sitzäußeren Lehnenseitenteils 3 an. Zwischen dem vorderen Ende 20 der Seitenwange 19 und dem hinteren Ende 15 des Außenabschnitts 8 des sitzäußeren Lehnenseitenteils 3 verbleibt ein kleiner Spalt 21.

Aus Designgründen ist ein Blendenelement 22 vorgesehen, das einen L-förmigen Querschnitt mit einem ersten Schenkel 22.1 und einem zweiten Schenkel 22.2 aufweist. Der erste Schenkel 22.1 des Blendenelements 22 überdeckt eine Vorderseite des Airbagmoduls 17. Der zweite Schenkel 22.2 des Blendenelements 22 erstreckt sich in einen Bereich zwischen die Innenseite des Außenabschnitts 8 des sitzäußeren Lehnenseitenteils 3 und die Tragstruktur bzw. den Rahmen 4 der Lehne. Das Blendenelement 22 ist primär aus Designgründen vorgesehen und verhindert, dass durch den Spalt 21 von außen her das Airbagmodul 17 bzw. der Rahmen 4 zu sehen ist.

Bei einer Auslösung des Airbagmoduls wird ein hier nicht dargestelltes Airbagmodulgehäuse durch den Druck des Airbags aufgerissen. Die Seitenwange 19, der Schenkel 22.1 des Blendenelements 22 und der Außenabschnitt 8 des sitzäußeren Lehnenseitenteils 3 werden dabei so auseinander gedrückt, dass der Airbag in Richtung des Pfeils 23 aus dem Lehnenseitenteil 3 austritt und sich außen an dem Außenabschnitt 8 vorbei zu einem vorderen Sitzbereich hin entfaltet.

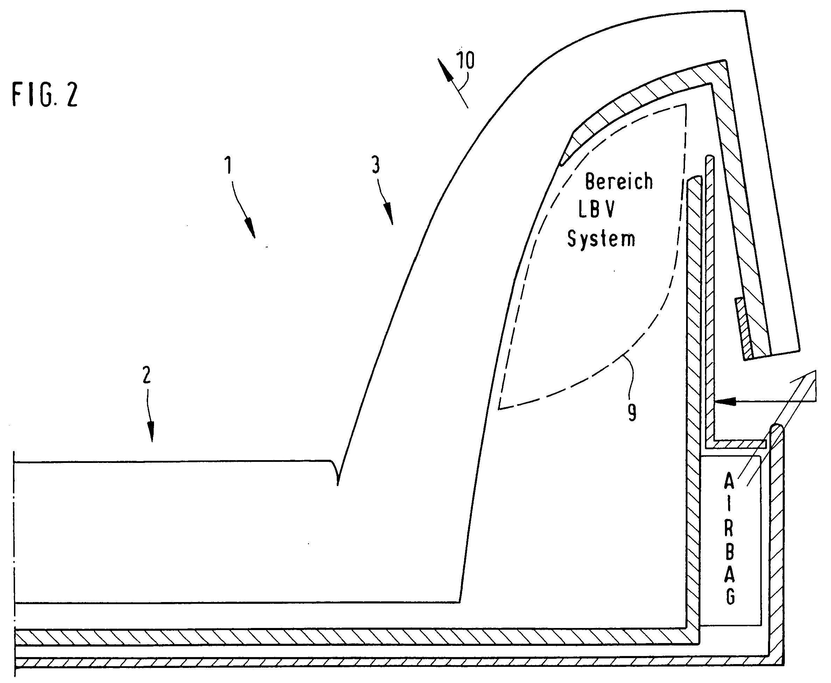

Figur 2 zeigt die Lehne 1 der Figur 1, wobei hier das Lehnenseitenteil 3 in Bezug auf das Lehnenmittelteil 2 schräg nach vorne in Richtung des Pfeils C verfahren ist. In dieser Position des Lehnenseitenteils 3 ist die Lehnenbreite etwas geringer als bei der in Figur 1 gezeigten Stellung. In dieser Stellung bietet die Lehne 1 einen besseren Seitenhalt.

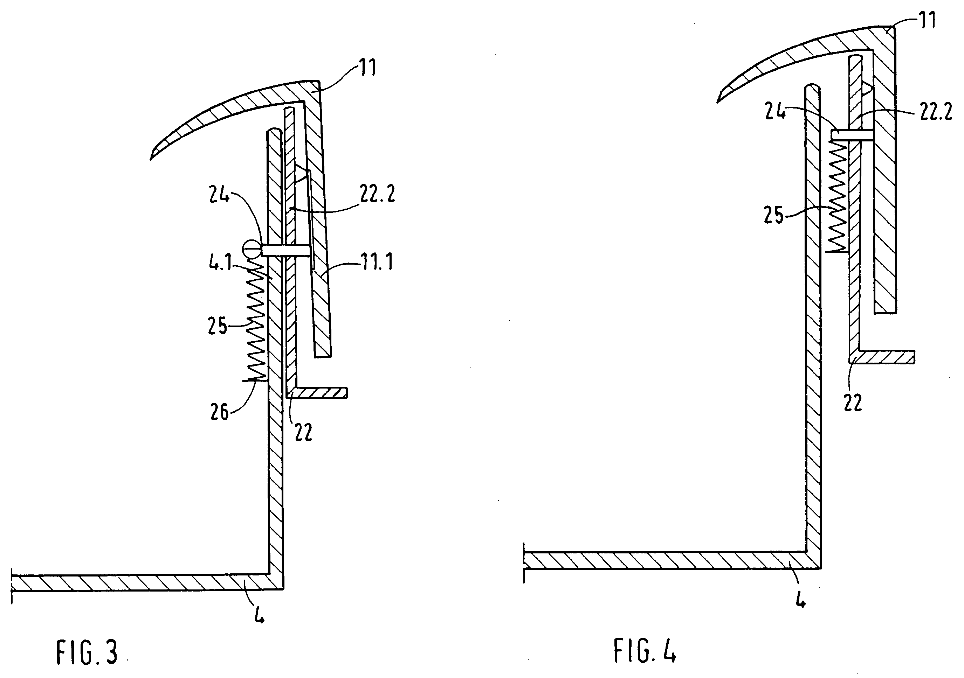

Figur 3 zeigt eine Variante des Ausführungsbeispiels der Figuren 1 und 2. Bei dem in Figur 3 gezeigten Ausführungsbeispiel ist in dem Schenkel 22.2 des Blendenelements 22 und in einem Teilabschnitt 4.1 des Rahmens 4 ein Längsschlitz vorgesehen. Durch den Längsschlitz erstreckt sich ein hier nur schematisch dargestellter Stift, der mit dem Schenkel 11.1 des Verstärkungselements 11 verbunden ist. Am freien Ende des Stifts 24 ist eine Feder 25 eingehängt, deren anderes Ende 26 mit dem Abschnitt 4.1 des Rahmens 4 verbunden ist.

Wenn das Lehnenseitenteil 3 aus der in Figur 2 gezeigten Stellung wieder in seine in Figur 1 gezeigte Ausgangsstellung zurückgefahren werden soll, dann unterstützt die Zugfeder 25 die "Rückfahrbewegung".

Figur 4 zeigt eine Variante des Ausführungsbeispiels der Figur 3. Bei diesem Ausführungsbeispiel ist lediglich in dem Schenkel 22.2 des Blendenelements 22 ein Schlitz vorgesehen, durch den sich der Stift 24 hindurch erstreckt. Ein Ende der Feder 25 ist hier unmittelbar an dem Blendenelement 22 eingehängt. Das andere Ende der Feder 25 ist, wie in Figur 3, am freien Ende des Stifts 24 eingehängt. Entsprechend Figur 3 unterstützt die Feder 25 das Zurückfahren des Lehnenseitenteils, d.h. das Zurückfahren von der in Figur 2 gezeigten Stellung in die in Figur 1 gezeigte Stellung.

Es sei nochmals ausdrücklich darauf hingewiesen, dass die im Zusammenhang mit den Figuren 1 - 4 am Beispiel einer Sitzlehne 1 erläuterte Erfindung nicht nur auf Sitzlehnen, sondern auch auf breitenverstellbare "Sitzpolster" , d.h. auf breitenverstellbare "Sitzflächen" von Fahrzeugsitzen anwendbar ist.

## Patentansprüche

1. Fahrzeugsitz mit einer Lehne (1), die ein Lehnenmittelteil (2) und Lehnenseitenteile (3) aufweist, die sich seitlich von dem Lehnenmittelteil (2) nach vorne erstrecken und die zur seitlichen Oberkörperabstützung vorgesehen sind, wobei die Lehnenseitenteile (3) jeweils einen mit dem Lehnenmittelteil (2) verbundenen Innenabschnitt (7) und einen damit verbundenen Außenabschnitt (8) aufweisen, welcher einen vorderen Bereich des Lehnenseitenteils (3) überdeckt, wobei die Lehnenseitenteile (3) in Bezug auf das Lehnenmittelteil (2) verstellbar angeordnet sind, derart, dass durch Feststellen der Lehnenseitenteile (3) die Lehnenbreite veränderbar ist, wobei der Innenabschnitt (7) und der Außenabschnitt (8) einstückig aus einem Schaummaterial (5) hergestellt sind und zumindest in einem Übergangsbereich zwischen dem Innenabschnitt (7) und dem Außenabschnitt (8) in den Innenabschnitt (7) und in den Außenabschnitt (8) ein Versteifungselement eingeschäumt ist, welches primär dazu vorgesehen ist, dem Außenabschnitt eine gewisse Steifigkeit zu verleihen, **dadurch gekennzeichnet, dass** in einem sitzäußeren Lehnenseitenteil (3) ein Airbagmodul (17) angeordnet ist, wobei die Fahrzeuglehne (1) eine Lehnenrückwand (18) aufweist, die eine sitzinnere und eine sitzäußere Seitenwange (19) aufweist, welche die hinteren Bereiche (16) der Lehnenseitenteile (3) zumindest teilweise überdecken, wobei die sitzäußere Seitenwange (19) eine gewisse Biegeelastizität aufweist und sich zumindest soweit nach vorne erstreckt, dass sie das Airbagmodul (17) von außen her überdeckt, und wobei der Airbag des Airbagmoduls (17 bei einer Airbagauslösung die sitzäußere Seitenwange (19) und den Außenabschnitt (8) des sitzäußeren Lehnenseitenteils (3) auseinander drückt und sich außen an dem Außenabschnitt (8) des sitzäußeren Lehnenseitenteils (3) vorbei zu einem vorderen Sitzbereich hin entfaltet, wobei die Fahrzeuglehne (1) eine aus Metall hergestellte Tragstruktur (4) aufweist und das Airbagmodul (17) an der Tragstruktur befestigt ist.

2. Fahrzeugsitz nach Anspruch 1, **dadurch gekennzeichnet, dass** das Airbagmodul (17) in einem hinteren Bereich (16) des sitzäußeren Lehnenseitenteils (3) angeordnet ist.

3. Fahrzeugsitz nach Anspruch 1 oder 2, **dadurch gekennzeichnet**, das das Lehnenmittelteil (2) und die Lehnenseitenteile (3) mit einem Dekormaterial (12) überzogen sind, wobei das Dekormaterial über den Innenabschnitt (7) und den Außenabschnitt (8) des sitzäußeren Lehnenseitenteils (3) gespannt, um ein hinteres Ende (15) des Außenabschnitts (8) des sitzäußeren Lehnenteils (3) umgeschlagen und an einer Innenseite des Außenabschnitts (8) des sitzäußeren Lehnenseitenteils (3) an dem Außenabschnitt (8) fixiert ist.

4. Fahrzeugsitz nach Anspruch 3, **dadurch gekennzeichnet, dass** das Dekormaterial (12) mittels einer Einhängeeinrichtung an der Innenseite des Außenabschnitts des sitzäußeren Lehnenseitenteils (3) an dem Außenabschnitt (8) eingehängt ist.

5. Fahrzeugsitz nach einem der Ansprüche 3 oder 4, **dadurch gekennzeichnet, dass** ein vorderes Ende (20) der sitzäußeren Seitenwange (19) der Lehnenrückwand (18) und das hintere Ende (15) des Außenabschnitts (8) des sitzäußeren Lehnenseitenteils (3) im Wesentlichen aneinander anstehen.

6. Fahrzeugsitz nach einem der Ansprüche 3 bis 5, **dadurch gekennzeichnet, dass** im Bereich zwischen dem hinteren Ende (15) des Außenabschnitts (8) des sitzäußeren Lehnenseitenteils (3) und dem Airbagmodul (17) ein Blendenelement (22) angeordnet ist, welches das Airbagmodul (17) verdeckt.

7. Fahrzeugsitz nach Anspruch 6, **dadurch gekennzeichnet, dass** das Blendenelement (22) einen mit einem ersten Schenkel (22.1) aufweist, der eine Vorderseite des Airbagmoduls (17) zumindest teilweise überdeckt und einem zweiten Schenkel (22.2), der sich in einen Bereich zwischen die Innenseite des Außenabschnitts (8) des sitzäußeren Lehnenseitenteils und der Tragstruktur (4) erstreckt und die Tragstruktur (4) von außen her gesehen verdeckt.

8. Fahrzeugsitz nach einem der vorangehenden Ansprüche, **dadurch gekennzeichnet, dass** die Lehnenseitenteile (3) über eine Schiebeführung mit der Tragstruktur (4) verbunden sind.

9. Fahrzeugsitz nach Anspruch 8, **dadurch gekennzeichnet, dass** die Schiebeführung gekrümmt ist, derart, dass die Lehnenseitenteile (3) beim nach vorne Schieben der Lehnenseitenteile (3) von der Lehnenrückwand (18) weg zusätzlich nach innen gedreht werden, wodurch sich die Lehnenbreite verringert.

10. Fahrzeugsitz nach einem der vorangehenden Ansprüche, **dadurch gekennzeichnet, dass** die Lehnenseitenteile durch einen durch einen Elektromotor betätigbaren Seilzug verfahrbar sind.

## Claims

1. A vehicle seat with a backrest (1) which has a backrest middle part (2) and backrest side parts (3) which extend forwards at the sides from the backrest middle part (2) and are provided to laterally support the upper body, wherein the backrest side parts (3) respectively have an inner portion (7) which is joined to the backrest middle part (2) and an outer portion (8) which is joined to the inner portion and which covers a front region of the backrest side part (3), wherein the backrest side parts (3) are arranged adjustably in respect of the backrest middle part (2) such that the backrest width can be altered by fixing the backrest side parts (3), wherein the inner portion (7) and the outer portion (8) are produced integrally from a foam material (5), and a reinforcing element is foamed into the inner portion (7) and into the outer portion (8) at least in a transition region between the inner portion (7) and the outer portion (8), which reinforcing element is primarily provided to give the outer portion an especial rigidity, **characterised in that** an airbag module (17) is arranged in a seat-exterior backrest side part (3), wherein the vehicle backrest (1) has a backrest rear wall (18) which has a seat-interior and a seat-exterior side wall (19) which at least partly cover the rear regions (16) of the backrest side parts (3), wherein the seat-exterior side wall (19) has a particular flexural resilience and extends forwards at least to such an extent that it covers the airbag module (17) from outside, and wherein upon the release of the airbag (17), the airbag of the airbag module (17) presses apart the seat-exterior side wall (19) and the outer portion (8) of the seat-exterior backrest side part (3) and it unfolds externally past the outer portion (8) of the seat-exterior backrest side part (3) towards a front seat region, wherein the vehicle backrest (1) has a metal support structure (4) and the airbag module (17) is attached to the support structure.

2. A vehicle seat according to claim 1, **characterised in that** the airbag module (17) is arranged in a rear region (16) of the seat-exterior backrest side part (3).

3. A vehicle seat according to claim 1 or claim 2, **characterised in that** the backrest middle part (2) and the backrest side parts (3) are covered with a decorative material (12), wherein the decorative material is stretched over the inner portion (7) and the outer portion (8) of the seat-external backrest side part (3), is wrapped around a rear end (15) of the outer portion (8) of the seat-external backrest side part (3), and is fixed to the outer portion (8) on an inner side of the outer portion (8) of the seat-external backrest side part (3).

4. A vehicle seat according to claim 3, **characterised in that** the decorative material (12) is hooked by a suspension device onto the outer portion (8) on the inner side of the outer portion of the seat-external backrest side part (3).

5. A vehicle seat according to either claim 3 or claim 4, **characterised in that** a front end (20) of the seat-external side wall (19) of the backrest rear wall (18) and the rear end (15) of the outer portion (8) of the seat-external backrest side part (3) are substantially applied against one another.

6. A vehicle seat according to any one of claims 3 to 5, **characterised in that** a screen element (22) which conceals the airbag module (17) is arranged in the region between the rear end (15) of the outer portion (8) of the seat-external backrest side part (3) and the airbag module (17).

7. A vehicle seat according to claim 6, **characterised in that** the screen element (22) has a first side (22.1) which at least partly covers a front side of the airbag module (17) and has a second side (22.2) which extends in a region between the inner side of the outer portion (8) of the seat-external backrest side part and the support structure (4) and conceals the support structure (4), seen from outside.

8. A method according to any one of the preceding claims, **characterised in that** the backrest side parts (3) are connected to the support structure (4) by a sliding guide.

9. A vehicle seat according to claim 8, **characterised in that** the sliding guide is curved such that when the backrest side parts (3) are moved forwards away from the backrest rear wall (18), the backrest side parts (3) are also rotated inwards, thereby reducing the width of the backrest.

10. A vehicle seat according to any one of the preceding claims, **characterised in that** the backrest side parts are movable by a cable pull which can be actuated by an electric motor.

## Revendications

1. Siège de véhicule équipé d'un dossier (1) comprenant une partie de dossier médiane (2) et des parties de dossier latérales (3) qui s'étendent latéralement vers l'avant à partir de la partie de dossier médiane (2) et qui sont prévues pour permettre un appui latéral du buste, les parties de dossier latérales (3) comportant chacune un segment interne (7) relié à la partie de dossier médiane (2) et un segment externe (8) relié à celui-ci qui recouvre la zone avant de la partie de dossier latérale (3), les parties de dossier latérales (3) étant montées réglables par rapport à la partie de dossier médiane (2) de façon à pouvoir modifier la largeur du dossier en bloquant les parties de dossier latérales (3), le segment interne (7) et le segment externe (8) étant réalisés en une seule pièce en un matériau alvéolaire (5), et, au moins dans la zone de transition entre le segment interne (7) et le segment externe (8) étant expansé, dans le segment interne (7) et dans le segment externe (8) un élément de rigidification qui est en premier lieu prévu pour conférer une rigidité donnée au segment externe,
**caractérisé en ce qu'**
un module d'airbag (17) est monté dans la partie de dossier latérale (3) externe au siège, le dossier (1) du véhicule comportant une paroi de dossier arrière (18) comportant une joue latérale interne au siège et une joue latérale externe au siège (19) qui recouvrent au moins partiellement la zone arrière (16) des parties de dossier latérale (3), la joue latérale externe au siège (19) présentant une élasticité à la flexion donnée et s'étendant au moins suffisamment vers l'avant pour recouvrir le module d'airbag (17) par l'extérieur, et, en cas de déclenchement, l'airbag du module d'airbag (17) repoussant en les écartant la joue latérale externe au siège (19) et le segment externe (8) de la partie de dossier latérale externe au siège (3), et se déployant à l'extérieur sur le segment externe (8) de la partie de dossier latérale (3) externe au siège vers la zone avant du siège, le dossier du véhicule (1) comprenant une structure support (4) réalisée en métal et le module d'airbag (17) étant fixé sur cette structure support.

2. Siège de véhicule conforme à la revendication 1,
**caractérisé en ce que**
le module d'airbag (17) est monté dans la zone arrière (16) de la partie de dossier latérale (3) externe au siège.

3. Siège de véhicule conforme à la revendication 1 ou 2,
**caractérisé en ce que**
la partie de dossier médiane (2) et les parties de dossier latérales (3) sont recouvertes d'un matériau décoratif (12), ce matériau décoratif étant tendu sur le segment interne (7) et le segment externe (8) de la partie de dossier latérale (3) externe au siège, pour envelopper l'extrémité arrière (15) du segment externe (8) de la partie de dossier latérale (3) externe au siège, et étant fixé sur le segment externe (8) de la partie de dossier latérale (3) externe au siège sur la face interne de ce segment externe (8).

4. Siège de véhicule conforme à la revendication 3,
**caractérisé en ce que**
le matériau décoratif (12) est accroché sur le segment externe (8) de la partie de dossier latérale (3) externe au siège au moyen d'un dispositif d'accrochage sur la face interne de ce segment externe (8).

5. Siège de véhicule conforme à l'une des revendications 3 et 4,
**caractérisé en ce que**
l'extrémité avant (20) de la joue latérale externe au siège (19) de la paroi arrière du dossier (18) et l'extrémité arrière (15) du segment externe (8) de la partie de dossier latérale (3) externe au siège sont essentiellement à fleur.

6. Siège de véhicule conforme à l'une des revendications 3 à 5,
**caractérisé en ce que**
dans la zone située entre l'extrémité arrière (15) du segment externe (8) de la partie de dossier latérale externe au siège (3) et le module d'airbag (17) est monté un élément formant écran (22) qui recouvre le module d'airbag (17).

7. Siège de véhicule conforme à la revendication 6,
**caractérisé en ce que**
l'élément formant écran (22) comporte une première branche (22.1) qui recouvre au moins partiellement la face avant du module d'airbag (17) et une seconde branche (22.2) qui s'étend dans la zone située entre la face interne du segment externe (8) de la partie de dossier latérale externe au siège et la structure support (4) et recouvre la structure support (4) par l'extérieur.

8. Siège de véhicule conforme à l'une des revendications précédentes,
**caractérisé en ce que**
les parties de dossier latérales (3) sont reliées à la structure support (4) par l'intermédiaire d'un guidage à coulisse.

9. Siège de véhicule conforme à la revendication 8,
**caractérisé en ce que**
le guidage à coulisse est cintré de sorte que lors d'un coulissement vers l'avant des parties de dossier latérales (3) ces parties de dossier latérales (3) soient, en outre déplacées en rotation vers l'intérieur en s'éloignant de la paroi arrière du dossier (18) de façon à diminuer la largeur du dossier.

10. Siège de véhicule conforme à l'une des revendications précédentes,
**caractérisé en ce que**
les parties de dossier latérales peuvent être déplacées par un câble de transmission pouvant être actionné par un moteur électrique.
